# EUROPÄISCHE PATENTSCHRIFT

(11) **EP 2 511 042 B1**
(45) Veröffentlichungstag und Bekanntmachung des Hinweises auf die Patenterteilung: **27.07.2016**
(21) Anmeldenummer: 12002489.8
(22) Anmeldetag: 05.04.2012
(51) Int. Cl.: B23K 31/02, B23K 33/00, B21D 39/03, F16B 5/08, F16S 1/14, B60G 7/00

(54) **Verfahren zur Herstellung einer stoffschlüssigen Verbindung zwischen zwei Bauteilen durch Schweissen oder Löten**
Method of forming a strong connection between two workpieces by welding or brazing/soldering
Procédé de fabrication d'une liaison forte entre deux pièces par soudage ou par brasage

(30) Priorität: 11.04.2011 DE 102011001958
(43) Veröffentlichungstag der Anmeldung: 17.10.2012
(73) Patentinhaber: Benteler Automobiltechnik GmbH, 33102 Paderborn (DE)
(72) Erfinder: Henksmeier, Thomas, 59329 Wadersloh (DE); Hochapfel, Erik, 34281 Guldensberg (DE)
(74) Vertreter: Griepenstroh, Jörg

(56) Entgegenhaltungen:
- DE-A1- 2 414 966
- DE-A1-102005 008 548
- US-A- 5 344 717
- US-A- 5 878 940
- US-B1- 6 241 144

## Beschreibung

Die Erfindung betrifft ein Verfahren zur Herstellung einer stoffschlüssigen Verbindung mit den Merkmalen des Oberbegriffs des Patentanspruchs 1 (siehe, z.B., DE 10 2005 008 548 A1).

Es ist bei einigen Schweißkonstruktionen, wie beispielsweise bei Querlenkern von Kraftfahrzeugen, bekannt, dass die zu verbindenden Bauteile ineinander gesteckt und verschweißt werden. Hierzu befindet sich in einem Bauteil für gewöhnlich ein Langloch. Das mit diesem Bauteil zu verschweißende Teil wird dann durch dieses Langloch gesteckt und mittels einer Kehlnaht im Bereich des Langlochs verschweißt.

Darüber hinaus hat die Anmelderin betriebsinterne Kenntnisse über einseitige Durchsteckverbindungen, bei welchen ein Stützblech in winkliger Ausführungsform verwendet wird. Der abgewinkelte Teil des Stützblechs wird vor der Verbindung zweier Halbschalen zu einem Hohlkörperbauteil an der Innenseite einer der Halbschalen durch Nieten, Clinchen oder Punktschweißen verbunden. Der andere Schenkel dieses Stützblechs steht dann von dem Schalengrundkörper ab und kann mit einer zweiten Halbschale verbunden werden, die einen entsprechenden Schweißspalt aufweist, durch welchen das Stützblech geführt werden kann.

Anschließend kann eine Verschweißung auf der Außenseite dieser zweiten Halbschale durchgeführt werden.

Bei diesen Durchsteck-Schweißverbindungen treten jedoch einige fertigungstechnische Schwierigkeiten auf. Beispielsweise ist es bei Durchsteck-Verbindungen erforderlich, das Langloch geringfügig breiter zu gestalten als das durchzusteckende Blech. Dieses Übermaß des Langlochs soll möglichst gering gehalten werden, damit die Breite des Schweißspaltes zwischen den beiden Bauteilen nicht zu groß wird und noch prozesssicher überbrückbar ist. Wird allerdings die Breite des Langlochs zu klein gewählt, führt dies zu einem Verhaken beim Einstecken des Bauteils, was zu Verzögerungen beim Durchsteckprozess führt.

Da die Breite des Langlochs möglichst gering gehalten werden soll, müssen kleine Werkzeuge zur Herstellung der Langlöcher verwendet werden. Dadurch ergibt sich das Problem, dass die Standzeit von Stanzwerkzeugen bei der Langlochherstellung mit abnehmender Breite der Langlöcher stark zurückgeht. Der Grund ist, dass der Werkzeugstempel unter Umständen zu dünn ausgeführt ist, wodurch der Verschleiß an dem Stanzwerkzeug zunimmt oder es binnen kurzer Zeit zum Stempelbruch kommt. Daher ist oftmals eine Stanzung des Blechbauteils als wirtschaftliche Methode erst bei einem ausreichend großen Verhältnis der Spaltbreite zur Wanddicke und bei hinreichend dicken Stützblechen möglich. Dies kann allerdings dazu führen, dass unnötig dicke und schwere Stützbleche verwendet werden müssen. Dadurch steigt wiederum das Gewicht des fertigen Bauteils. Auch die Materialkosten nehmen zu. Ein weiterer Nachteil ist, dass mit verschlissenen Werkzeugstempeln Schweißspaltbreitenschwankungen auftreten können, wodurch eine prozesssichere Verschweißung der Bleche gefährdet wird.

Damit der Schweißspalt nicht zu groß wird, muss das gesteckte Blech häufig zum viel breiteren Langloch derart positioniert werden, dass ein prozessfähiger Schweißspalt nur einseitig erreicht wird, wobei auf der gegenüberliegenden Seite ein viel größerer Spalt existiert. Dieser breite Spalt kann dann in unabgedichteter Form zu Korrosion führen. Auch können sich Nachteile im Hinblick auf eine Dauerhaltbarkeit aufgrund von Schwingungen, Biege- und Torsionsbeanspruchungen des eingesteckten Bauteils ergeben, wenn dieses nicht nur der Abstützung des Hohlraums, sondern auch der Verbindung mit weiteren Bauteilen dient.

Zum Stand der Technik sind die US 6 241 144 B1, DE 10 2005 008 548 A1, US 5 344 717 A und DE 24 14 966 A1 zu nennen. Aus diesen Druckschriften ist es bekannt, Toleranzen durch unterschiedliche Einstecktiefen auszugleichen oder an Verbindungen zwischen rohrförmigen Bauteilen und Durchsteckflanschen Vorsprünge im Verbindungsbereich vorzusehen, beispielsweise um eine exakte Lotspaltbreite für stoffschlüssige Verbindungen zu schaffen. Auch ist es bekannt, bei einem Langloch die einander gegenüberliegenden Flanken gekrümmt auszubilden, so dass sich etwa auf halber Länge des Langlochs bzw. der Flanken eine Engstelle zur Zentrierung eines Bauteils ergibt, das in dieses Langloch eingeführt wird.

Die US 5 878 940 A offenbart ein Verfahren zur Herstellung eines Profilbauteils, bei welchem in einer gebogenen Platine Schlitze zur Aufnahme von Zungen einer anderen gebogenen oder geraden Platine vorgesehen sind. Die Zungen werden im Bereich der Schlitze verschweißt.

Hiervon ausgehend liegt der Erfindung die Aufgabe zugrunde, ein Verfahren zur Herstellung einer stoffschlüssigen Verbindung zwischen zwei Bauteilen aus Metall aufzuzeigen, die ineinander gesteckt sind, wobei die Bauteile sich prozesssicher exakt positionieren lassen, gut zu fügen sind und wobei ein Spalt zwischen den Bauteilen eine für die Prozessfähigkeit nachteilige Breite nicht überschreitet. Darüber hinaus soll das erfindungsgemäße Verfahren eine kostengünstige Fertigung von Öffnungen ermöglichen, die sich nicht nachteilig auf die Standzeit der Fertigungswerkzeuge auswirkt.

Die von Patentanspruch 1 abhängigen Patentansprüche 2 bis 6 betreffen vorteilhafte Weiterbildungen der Erfindung.

Bei dem erfindungsgemäßen Verfahren zur Herstellung einer stoffschlüssigen Verbindung zwischen zwei Bauteilen aus Metall sind drei wesentliche Fertigungsschritte vorgesehen. In einem ersten Bauteil aus Blech wird eine Öffnung in Form eines Langlochs zur Aufnahme des Seitenbauteils hergestellt bzw. es wird ein mit einer Öffnung versehenes erstes Bauteil bereitgestellt, wobei an der Öffnung insgesamt wenigstens drei in Richtung des zweiten Bauteils aus Blech weisende Vorsprünge ausgebildet werden. Anschließend wird das zweite Bauteil in die Öffnung des ersten Bauteils eingeführt. Hierbei verbleibt zumindest bereichsweise ein Spalt zwischen den beiden Bauteilen. Schließlich werden die Bauteile stoffschlüssig im Bereich des Spaltes miteinander verbunden.

Das erfindungsgemäße Verfahren kann auch zur Anwendung kommen, wenn eine Verbindung zwischen mehr als zwei Bauteilen hergestellt werden soll, z.B. wenn das zweite Bauteil zusätzlich noch mittels des erfindungsgemäßen Verfahrens mit einem dritten Bauteil verbunden werden soll.

Im Rahmen der Erfindung handelt es sich bei der stoffschlüssigen Verbindung insbesondere um ein Schweißverfahren (Lichtbogenhandschweißen, MIG, WIG, MAG, Laserhybrid). Es kann sich aber auch um ein Lötverfahren handeln. Selbst Klebeverbindungen sind möglich. Es ist auch vorstellbar, dass unterschiedliche stoffschlüssige Verbindungsverfahren miteinander kombiniert werden.

Bei den Bauteilen aus Metall handelt es sich insbesondere um solche aus Stahl oder Leichtmetall. Die beiden Bauteile sind Bleche. Die Öffnungen sind als Langloch ausgebildet. Das Verfahren kommt insbesondere bei Strukturen zum Einsatz, bei welchen das erste Bauteil mittels des zweiten Bauteils abgestützt werden soll. Das ist insbesondere bei Hohlstrukturen der Fall. Demgemäß ist ein erstes Bauteil als Hohlkörper ausgebildet. Dieser Hohlkörper ist aus zu Halbschalen umgeformten Platinen hergestellt. Die Halbschalen werden zusätzlich über das zweite Bauteil, das als Stützblech dient, abgestützt. An dem Hohlkörper bzw. dem ersten Bauteil sind mithin Öffnungen in Form von Langlöchern hergestellt, in welche das zweite Bauteil unter Abstützung an den in den Öffnungen angeordneten Vorsprüngen eingeführt wird. Das Herstellen der Öffnungen kann vor oder nach dem Umformen von Platinen zu den Halbschalen erfolgen. Aufgrund der Vorsprünge ist eine definierte Spaltbreite zwischen den beiden Bauteilen im Bereich der Öffnung gewährleistet. Durch die präzise Positionierung können auch präzisere Bauteilverbindungen prozesssicher hergestellt werden.

Beispielsweise kann bei einem ersten Bauteil aus Blech mit einer Dicke von 3,5 mm die Öffnung in Form eines Langlochs eine Breite von 7 mm aufweisen, wobei die Vorsprünge in den Öffnungen sich um 1,75 mm in die Öffnung hinein erstrecken. Da das zweite Bauteil ebenfalls aus einem Blech mit einer Dicke von 3,5 mm bestehen kann, ergibt sich eine Breite des Spaltes von beidseitig 1,75 mm. Wenn die Öffnung durch Stanzen hergestellt wird, kann ein Stanzwerkzeug verwendet werden, das eine Breite von 7 mm besitzt und damit eine hinreichend lange Standzeit besitzt. Würde auf die Vorsprünge in den Öffnungen verzichtet werden, würde sich ein Spalt bei einseitiger Anlage des eingesteckten zweiten Bauteils am Rand der Öffnung von bis zu 3,5 mm ergeben, was beispielsweise ein prozessfähiges Schweißen nicht mehr erlaubt. Die Alternative wäre hier eine Reduzierung der Langlochbreite auf 5,25 mm, was jedoch eine deutlich Verringerung der Standzeit des Stanzwerkzeugs bedeuten würde.

Darüber hinaus wird durch die punktförmige Berührung nicht nur eine exaktere Spaltbreite, sondern auch eine exaktere Positionierung der Bauteile zueinander ermöglicht. Zudem wird der Fügeprozess erheblich vereinfacht, da es nur noch im Bereich der Vorsprünge zu Engstellen/Kontaktstellen kommen kann. Im Vergleich zu einer linienförmigen Berührung sinkt die Wahrscheinlichkeit des Verhakens. Das Einfügen des zweiten Bauteils geht dadurch nicht nur leichter und reibungsloser, sondern auch schneller. Natürlich können die Vorsprünge in den Öffnungen auch zusätzlich als Toleranzausgleich dienen, um fertigungs- und materialbedingte Schwankungen zu kompensieren.

Im Rahmen der Erfindung sind mindestens drei Vorsprünge vorgesehen, so dass es zu einer Drei-Punkt-Lagerung des zweiten Bauteils innerhalb des ersten Bauteils kommt. Besonders bevorzugt sind zwei oder mehr Vorsprünge je Längsseite des zweiten Bauteils vorhanden. Die Vorsprünge sind in Längsrichtung des Langlochs zueinander versetzt angeordnet.

Das Langloch muss im Rahmen der Erfindung nicht zwangsläufig gerade sein. Es kann auch einen gekrümmten Verlauf haben. Gerade bei einem gekrümmten oder kurvenförmigen Verlauf kommen die Vorteile der Erfindung besonders zu tragen, da in diesem Fall das zweite Bauteil nicht exakt an die Krümmung der Öffnung angepasst werden musste. Mit dem erfindungsgemäßen Verfahren können besonders gut Toleranzschwankungen bei kurvigem Verlauf der Fügestelle ausgeglichen werden, so dass das Langloch als auch das einzufügende zweite Bauteile mit weniger engen Toleranzen gefertigt werden können. Mit dem erfindungsgemäßen Verfahren werden auch geringe Fertigungsfehler, wie zum Beispiel unterschiedliche Rauigkeiten oder Zuschnittsfehler der Kanten, ausgeglichen. Gerade bei einem kurvenförmigen Verlauf kann eine einfache Anpassung der Spaltbreiten realisiert werden, was bei Öffnungen ohne die erfindungsgemäßen Vorsprünge schwierig und aufwendig ist.

Das erfindungsgemäße Verfahren kommt insbesondere zur Herstellung von Fahrzeugbauteilen zum Einsatz, insbesondere bei Querlenkern oder bei Verbundlenkerhinterachsen, mithin bei Kraftfahrzeugbauteilen, die hohen Beanspruchungen unterliegen, aber dennoch ein geringes Gewicht besitzen sollen. Je nach Bauform des jeweiligen Fahrzeugbauteils ist im Rahmen der Erfindung auch denkbar, dass das als Hohlkörper ausgebildete erste Bauteil einen Einsatz in Form des zweiten Bauteils besitzt, welches mit einer der Halbschalen, aus der der Hohlkörper besteht, gemäß dem erfindungsgemäßen Verfahren verbunden ist und wobei das andere Ende des als Stützblech dienenden zweiten Bauteil unter Anwendung eines von dem erfindungsgemäßen Verfahren abweichenden Verfahren mit dem ersten Bauteil verbunden ist. Das zweite Bauteil kann beispielsweise eine Abwinklung haben. Zusätzlich können im abgewinkelten Ende des zweiten Bauteils Nietverbindungen vorgesehen sein, um das Ende des zweiten Bauteils mit der Halbschale des ersten Bauteils zu verbinden.

Unabhängig vom Verbindungsverfahren hat die Erfindung in jedem Fall den Vorteil, dass die Bleche in ihrer jeweiligen Lage exakter zueinander positioniert werden können, wodurch auf aufwendige Positioniervorrichtungen verzichtet werden kann. Die Bauteildicke kann besser aufeinander abgestimmt werden. Das zweite, als Stützblech dienende Bauteil kann eine andere Wandstärke besitzen als das erste Bauteil. Dadurch kann eine Gewichtsoptimierung erfolgen. Bei einer prozesssicheren Einstellung des Schweißspaltes kann auch die nachfolgende Schweißung prozesssicher erfolgen, was insbesondere bei größeren Spalten und hier in Kombination mit relativ dünnen Stützblechen von Vorteil ist. Zudem kann mit dem erfindungsgemäßen Verfahren auf Stanzwerkzeuge zurückgegriffen werden, die eine erhöhte Standzeit besitzen. Mithin wird im Rahmen der Erfindung auch eine Vorrichtung zur Herstellung von Öffnungen in Blechbauteilen zu dem erfindungsgemäßen Verfahren beansprucht, wobei das Stanzwerkzeug zur Herstellung der Öffnungen mit seitlichen Aussparungen zur Ausbildung von Vorsprüngen im Werkstück versehen ist. Mit einem solchen Stanzwerkzeug lassen sich die erforderlichen Öffnungen leicht in einem Arbeitsschritt und mithin kostengünstig und schnell erstellen, was insbesondere bei der Serienfertigung von Vorteil ist.

Das erfindungsgemäße Verfahren ist nicht auf die Herstellung von Bauteilen für den Fahrwerkbereich eines Kraftfahrzeugs beschränkt. Denkbar ist auch die Herstellung von zum Beispiel Wärmetauschern, Regalelementen oder Heizkörpern, mithin alle Verfahren, bei denen zwei Bauteile, insbesondere blechförmige Bauteile, miteinander verbunden werden sollen.

Hierbei ist anzumerken, dass insbesondere bei einem Verschweißen der Bauteile die Öffnung vorzugsweise vollständig verschlossen wird. Dadurch wird das Eindringen von Verschmutzungen, insbesondere Flüssigkeiten, in ein als Hohlkörper ausgeführtes erstes Bauteil verhindert. Zudem kann durch Ausbildung der Öffnung in einer Sicke des ersten Bauteils eine Anordnung geschaffen werden, bei welcher das zweite Bauteil nicht über den Sickenrand des ersten Bauteils vorsteht. Gleiches gilt für die Fügezone, insbesondere eine Schweißnaht. Auch diese kann vollständig in der Sicke liegen und ragt nicht aus dieser hervor.

Die Erfindung wird nachfolgend anhand eines in den Zeichnungen dargestellten Ausführungsbeispiels näher erläutert. Es zeigt:
- Figur 1: eine perspektivische Darstellung zweier ineinander greifender Bauteile, die für eine Schweißverbindung vorbereitet sind;
- Figur 2: eine Schnittdarstellung durch die Schweißverbindung der Figur 1;
- Figur 3: eine weitere Ausführungsform einer Bauteilverbindung mit einer kurvenförmig verlaufenden Öffnung und
- Figur 4: eine weitere Ausführungsform einer Bauteilverbindung an einem Hohlprofil in geschnittener Darstellung.

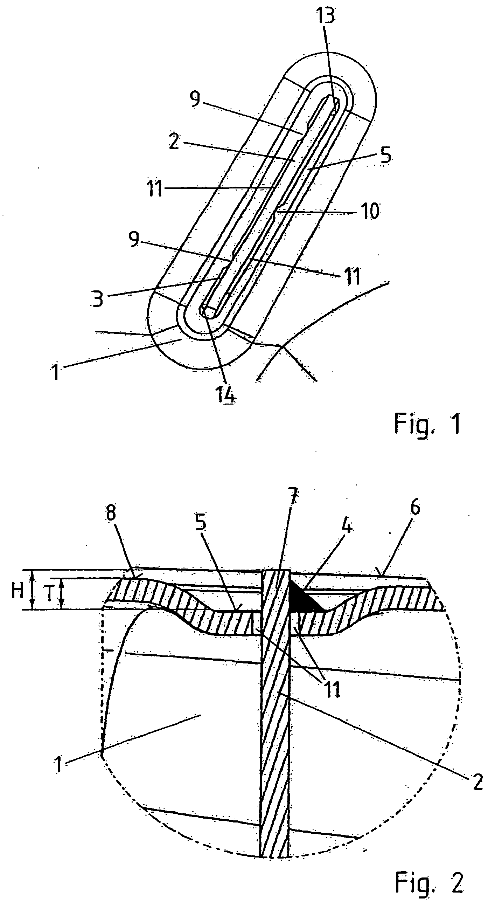

Figur 1 zeigt zwei ineinander greifende Blechbauteile 1, 2. Aus der Schnittdarstellung gemäß Figur 2 wird deutlich, wie diese beiden Bauteile 1, 2 ineinander greifen. Bei dem ersten Bauteil 1 handelt es sich um ein Hohlprofil, insbesondere eines Querlenkers oder einer Verbundlenkerhinterachse. Dieses als Bauteil 1 bezeichnete Hohlprofil soll durch das zweite Bauteil 2 innenseitig ausgesteift werden. Das zweite Bauteil 2 dient mithin als Stützblech. Bei der Herstellung eines Querlenkers oder einer Verbundlenkerachse wird mithin das erste Bauteil 1 als Hohlkörper aus Halbschalen zusammengesetzt, die aus umgeformten Platinen bereitgestellt werden. Zwischen die beiden Halbschalen wird das zweite Bauteil 2 als Stützblech eingesetzt, so dass es aus einer als Langloch ausgeführten Öffnung 3 des ersten Bauteils 1 herausragt (Figur 2). Das zweite Bauteil 2 soll nach dem Einsetzen in die Öffnung 3 stoffschlüssig mittels Verschweißen mit dem ersten Bauteil 1 verschweißt werden.

Figur 2 zeigt eine Schweißnaht 4, die nach dem Ineinanderstecken der beiden Bauteile hergestellt wird. Es handelt sich hierbei um eine Kehlnaht, die bevorzugt beidseitig der zu fügenden Bauteile gezogen wird.

Figur 2 zeigt ferner, dass sich die Öffnung 3 und die Kehlnaht 4 (Schweißnaht) innerhalb einer Sicke 5 befinden. Dadurch steht der angeschweißte Bereich des zweiten Bauteils nur geringfügig über die Kontur 6 des ersten Bauteils 1 vor. Der weitaus überwiegende Teil befindet sich innerhalb der Sicke 5, ebenso wie die Schweißnaht 4. Die Sicke besitzt eine Tiefe T. Das verschweißte Ende 7 des zweiten Bauteils 2 besitzt eine Höhe H, wobei H bei diesem Ausführungsbeispiel etwa 1,3 x T ist. Vorzugsweise ist H ≤ T, so dass das Ende 7 nicht über einen Sickenrand 8 vorsteht. Figur 1 zeigt, dass in der Öffnung 3 jeweils längsseits des zweiten Bauteils 2 Vorsprünge 9, 10 angeordnet sind. Bei diesem Ausführungsbeispiel handelt es sich um drei Vorsprünge, die über die Länge der als Langloch ausgeführten Öffnung 3 versetzt zueinander angeordnet sind. Aufgrund der ungeraden Anzahl befinden sich auf der in der Bildebene linken Seite zwei Vorsprünge 9. Auf der gegenüberliegenden Seite befindet sich ein weiterer Vorsprung 10, der etwa in der Mitte des Langlochs angeordnet ist. Die Vorsprünge 9, 10 sind identisch konfiguriert, so dass sich beiderseits des zweiten Bauteils 2 ein Spalt 11, 12 einstellt, der eine prozesssichere stoffschlüssige Fügung der beiden Bauteile 1, 2 miteinander gewährleistet. Die Spalte 11, 12 und mithin die Höhe der Vorsprünge 9, 10 sind so zu bemessen, dass die Längskanten 13, 14 nicht als linienförmige Anlagefläche für das zweite Bauteil 2 dienen. Die Abstützung erfolgt über die punktuell vorgesehenen Vorsprünge 9, 10.

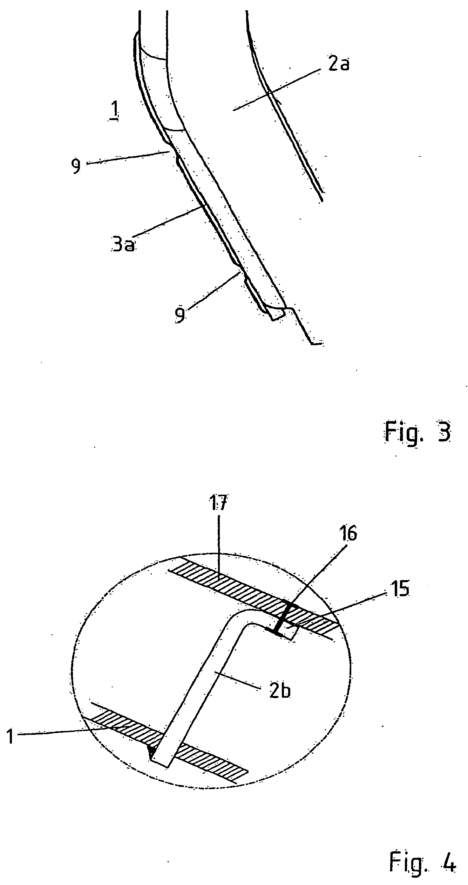

Die Öffnung 3 muss nicht zwangsläufig als gerades Langloch ausgestaltet sein. Es kann sich auch um eine als Kurve ausgeführte Öffnung 3a handeln, wie sie in Figur 3 dargestellt ist. Auch an diesem Langloch sind als Positioniernasen dienende Vorsprünge 9 vorhanden, über welche die Breite des Spalts exakt eingestellt wird. Die Vorsprünge/Positioniernasen an der gegenüberliegenden Längsseite sind durch das eingesteckte zweite Bauteil 2a verdeckt.

Figur 4 zeigt schließlich eine Ausführungsform, bei welcher ein erstes Bauteil 1 nach der vorher beschriebenen Art und Weise über eine Durchsteckfügeverbindung mit einem zweiten Bauteil 2b verbunden ist. Bei dieser Variante ist jedoch das in der Bildebene obere Ende 15 abgekröpft und liegt damit nicht als stirnseitiger Stoß, der in seiner Breite auf die Dicke des Blechs des zweiten Bauteils 2b beschränkt ist, sondern mit seiner Längsseite flächig an. Über eine Nietverbindung 16 ist dieses abgekröpfte Ende 15 dann mit einer zweiten Wandung 17 des ersten Bauteils 1 verbunden.

### Bezugszeichen:

1 - erstes Blechbauteil
2 - zweites Blechbauteil
2a - zweites Bauteil
2b - zweites Bauteil
3 - Öffnung
3a - Öffnung
4 - Schweißnaht
5 - Sicke
6 - Kontur
7 - Ende
8 - Sickenrand
9 - Vorsprung
10- Vorsprung
11 - Spalt
12- Spalt
13- Längskante
14- Längskante
15- Ende
16- Nietverbindung
17- zweite Wandung

A - Abstand
H - Höhe
T - Tiefe

## Patentansprüche

1. Verfahren zur Herstellung einer stoffschlüssigen Verbindung zwischen zwei Bauteilen aus Metall in Form von Blechen, mit folgenden Schritten:
• Als erstes Bauteil (1) wird ein Hohlkörper aus zu Halbschalen umgeformten Platinen bereitgestellt;
• An den Platinen werden, bevor oder nachdem sie zu Halbschalen umgeformt und zum Hohlkörper gefügt werden, Öffnungen (3, 3a) hergestellt;
• Als zweites Bauteil (2, 2a, 2b) wird ein Stützblech bereitgestellt; **gekennzeichnet durch** folgende Schritte :
• An den in Form von Langlöchern hergestellten Öffnungen (3, 3a) werden insgesamt wenigstens drei in Richtung des zweiten Bauteils (2, 2a, 2b) weisende Vorsprünge (9, 10) verteilt auf die einander gegenüberliegende Längskanten (13, 14) der Öffnungen (3, 3a) hergestellt, wobei die Vorsprünge (9, 10) in den Öffnungen (3, 3a) in Längsrichtung des Langlochs zueinander versetzt angeordnet sind;
• Das zweite Bauteil (2, 2a, 2b) wird in die Öffnung (3, 3a) des ersten Bauteils (1) unter Abstützung an den Vorsprüngen (9, 10) eingeführt, wobei zumindest bereichsweise ein Spalt (11, 12) zwischen den beiden Bauteilen (1, 2, 2a, 2b) verbleibt;
• Die beiden Bauteile (1, 2, 2a, 2b) werden stoffschlüssig im Bereich des Spaltes (11, 12) miteinander verbunden, so dass die Halbschalen über das zweite Bauteil (2, 2a, 2b) miteinander verbunden werden.

2. Verfahren nach Anspruch 1, **Dadurch gekennzeichnet, dass** die Öffnung (3, 3a) in einer Sicke (5) des ersten Bauteils (1) ausgebildet wird, die eine gegenüber einem Sickenrand (8) gemessene Tiefe (T) besitzt, wobei weder das zweite Bauteil (2, 2a, 2b) noch die Fügezone zwischen den Bauteilen (1, 2, 2a, 2b) über den Sickenrand (8) vorsteht.

3. Verfahren nach Anspruch 1 oder 2, **dadurch gekennzeichnet, dass** die Öffnung (3a) als Langloch mit kurvenförmigem Verlauf ausgebildet wird.

4. Verfahren nach einem der Ansprüche 1 bis 3, **dadurch gekennzeichnet, dass** die Öffnung (3, 3a) durch Stanzen hergestellt wird, wobei ein Stanzwerkzeug verwendet wird, das wenigstens eine Aussparung zur Herstellung der Vorsprünge (9, 10) aufweist.

5. Verfahren nach einem der Ansprüche 1 bis 4, **dadurch gekennzeichnet, dass** die Öffnung (3, 3a) durch die stoffschlüssige Verbindung vollständig geschlossen wird.

6. Verfahren nach einem der Ansprüche 1 bis 5, **dadurch gekennzeichnet, dass** als stoffschlüssiges Verbindungsverfahren ein Schweißverfahren zum Einsatz kommt, mittels welchem Bauteile (1, 2, 2a, 2b) aus Stahlblech oder einer Leichtmetalllegierung verbunden werden.

## Claims

1. Procedure for manufacturing a firmly bonded connection between two metal structural components in the form of sheet metal, with the following steps:
- A hollow body of plates reshaped into half-shells is provided as the first structural component (1):
- Openings (3, 3a) are produced in the plates before or after they are reshaped into half-shells and fixed as hollow bodies;
- As the second structural component (2,2a,2b) a support plate is provided, characterised through the following steps:
- A total of at least three projections (9,10) pointing in the direction of the second structural component (2, 2a, 2b) are produced arranged at the openings (3, 3a) produced in the form of longitudinal slots and distributed on the longitudinal edges (13,14) of the openings (3,3a) opposite one another, wherein the protrusions (9,10) are arranged in the openings (3,3a) in the longitudinal direction of the longitudinal slot holes offset from one another;
- The second structural component (2,2a,2b) is introduced to the opening (3,3a) of the first structural component (1) under the support at the protrusions (9,10), wherein at least in certain areas one gap (11,12) remains between the two structural components (1,2,2a,2b);
- The two structural components (1,2,2a,2b) are connected to one another in the region of the gap (11,12) by firm bonding to one another, so that the half-shells are connected with one another via the second structural component (2,2a,2b).

2. Procedure according to Claim 1, **characterised in that** the opening (3,3a) is formed in a groove (5) of the first structural component (1), which has a depth (T) measured from an edge of the groove (8), wherein neither the second structural component (2,2a,2b) nor the joint zone between the structural components (1,2,2a,2b) protrude over the edge of the groove (8).

3. Procedure according to Claim 1 or Claim 2, **characterised in that** the opening (3a) is formed as a longitudinal slot with a curved shape.

4. Procedure according to one of the Claims 1 to 3, **characterised in that** the opening (3,3a) is produced through punching, wherein a punching tool is used that has at least one notch to produce the protrusions (9,10).

5. Procedure according to one of the Claims 1 to 4, **characterised in that** the opening (3,3a) is completely closed by the firmly bonded connection.

6. Procedure according to one of the Claims 1 to 5, **characterised in that** a welding process is used as the firmly bonding connecting process, by means of which structural components (1,2,2a,2b) made of sheet metal or of light metal alloy are connected.

## Revendications

1. Procédé de fabrication d'une liaison de matière entre deux pièces en métal sous forme de tôles, avec les étapes suivantes :
- comme première pièce (1), on prépare un corps creux à partir de plaques formées en demi-coques ;
- avant ou après qu'elles soient ou sont formées en demi-coques et jointes pour former le corps creux, on fabrique sur les plaques des ouvertures (3, 3a) ;
- comme deuxième pièce (2, 2a, 2b), on prépare une tôle d'appui ;
**caractérisé par** les étapes suivantes :
- on fabrique sur les ouvertures (3, 3a), fabriquées en forme de trous oblongs, au total au moins trois parties en saillie (9, 10) qui pointent en direction de la deuxième pièce (2, 2a, 2b) et qui sont réparties sur les arêtes longitudinales (13, 14), à l'opposé l'une de l'autre, des ouvertures (3, 3a), les parties en saillie (9, 10) étant agencées dans les ouvertures (3, 3a) de manière décalées l'une par rapport à l'autre dans la direction longitudinale du trou oblong ;
- on introduit la deuxième pièce (2, 2a, 2b) dans l'ouverture (3, 3a) de la première pièce (1) en s'appuyant sur les parties en saillie (9, 10), une fente (11, 12) restant au moins par endroits entre les deux pièces (1, 2, 2a, 2b) ;
- on assemble par liaison de matière les deux pièces (1, 2, 2a, 2b) dans la zone de la fente (11, 12) de telle sorte que les demi-coques sont assemblées l'une à l'autre par l'intermédiaire de la deuxième pièce (2, 2a, 2b).

2. Procédé selon la revendication 1, **caractérisé en ce que** l'ouverture (3, 3a) est conçue dans une moulure (5) de la première pièce (1), laquelle moulure a une profondeur (T) mesurée par rapport à un bord de moulure (8), ni la deuxième pièce (2, 2a, 2b) ni la zone d'assemblage entre les pièces (1, 2, 2a, 2b) ne dépassant par-dessus le bord de moulure (8).

3. Procédé selon la revendication 1 ou 2, **caractérisé en ce que** l'ouverture (3a) est conçue comme un trou oblong avec une allure courbe.

4. Procédé selon l'une des revendications 1 à 3, **caractérisé en ce que** l'ouverture (3, 3a) est fabriquée par estampage, un outil d'estampage qui comporte au moins un évidement pour la fabrication des parties en saillie (9, 10) étant alors utilisé.

5. Procédé selon l'une des revendications 1 à 4, **caractérisé en ce que** l'ouverture (3, 3a) est complètement fermée par l'assemblage à liaison de matière.

6. Procédé selon l'une des revendications 1 à 5, **caractérisé en ce que** l'on utilise comme procédé d'assemblage à liaison de matière un procédé de soudure au moyen duquel des pièces (1, 2, 2a, 2b) en tôle d'acier ou en un autre alliage métallique léger sont assemblées.
